# EUROPEAN PATENT APPLICATION

(11) **EP 2 055 364 A2**
(43) Date of publication of application: **06.05.2009**
(21) Application number: 08167779.1
(22) Date of filing: 28.10.2008
(51) Int. Cl.: B01D 35/147, F16H 57/04

(54) **A suction filter for an automatic transmission**

(30) Priority: 01.11.2007 US 933575
(71) Applicant: Ford Global Technologies, LLC, Dearborn, MI 48126 (US)
(72) Inventor: Pekarsky, Lev, W. Bloomfield, MI 48322 (US); Droste, Timothy, Howell, MI 48855 (US); Hafemeister, Gary, Plymouth, MI 48170 (US)
(74) Representative: Messulam, Adam Clive

(57) **Abstract**

A filter assembly 10 includes a filter housing 12 including an inlet 18 through which hydraulic fluid enters the housing 12 and an outlet 20 through which hydraulic fluid exits the housing 12, a bypass valve housing 36 containing a bypass valve 16 located adjacent the inlet 18 in a chamber 25, the bypass valve 16 including an orifice 28 that is opened and closed in response to differential pressure across the valve 16 and a screen 42 secured to the valve housing 36 covering the orifice 28, the screen 42 having a fine mesh for removing contaminants from the fluid that flows through the bypass valve 16.

## Description

This invention relates generally to a filter assembly and, in particular, to a filter for removing contaminants in automatic transmission fluid (ATF) contained in an oil pan.

Hydraulic fluid, which circulates continuously through an automatic transmission and an external oil cooler, reenters a transmission oil pan from the cooler through a filter, whose purpose is to remove contaminants entrained in the fluid. A hydraulic pump is supplied with fluid from the outlet of the filter. A bypass valve may be arranged in parallel flow path with a filter element such that the valve opens and closes in response to differential pressure across the valve.

When the valve is open, however, the filter is bypassed, thereby potentially allowing large contaminants to reenter and recirculate through the transmission.

During cold temperature operation when the valve is open, air may enter the filter assembly and accumulate in large bubbles, which exit the filter and enter the intake of the pump, thereby causing slug-like fluid flow or spikes, which can produce pressure instability downstream of the pump and adversely affect the pump prime.

Undesired high pressure differential across the valve, caused by cold temperature operation and restrictions in the flow path leading to the valve inlet, may cause excessively long periods when the bypass valve is open and the filter is inoperative.

A need exists in the industry for a filter that avoids bypass valve instability due to fluctuations in pump suction flow, excessive differential pressure across a bypass valve, and air entrapment in the housing of a fluid filter.

It is an object of the invention to provide a filter assembly that satisfies the above referred to need.

According to the invention there is provided a filter assembly for an automatic transmission characterised in that the assembly comprises a filter housing including an inlet through which hydraulic fluid enters the housing and an outlet through which hydraulic fluid exits the housing and a bypass valve housing containing a bypass valve located adjacent the inlet in a chamber defined by the bypass valve housing, the bypass valve including an orifice that is opened and closed in response to differential pressure across the bypass valve.

The filter assembly may further comprise a screen secured to the bypass valve housing so as to cover the orifice and having a fine mesh for removing contaminants from the fluid that flows through the bypass valve.

The valve housing may further comprise ribs for supporting the screen.

The screen may be in the form of a dome supported by ribs secured to the bypass valve housing.

The filter assembly may further comprise a channel formed in the filter housing having a second inlet communicating with the chamber, a second outlet communicating with the outlet of the valve housing and a length connecting the second inlet and second outlet.

The channel may increase in elevation as the distance from the second inlet along the length of the channel increases.

The channel may have a depth that increases along the channel length.

The filter assembly may further comprise a filtration element located in the filter housing, the filtration element extending from the bypass valve towards the filter housing outlet.

The bypass valve housing may further comprise a valve seat in which the orifice is formed, a ball movable into contact with the valve seat to close the orifice and out of contact with the valve seat to open the orifice and a spring for urging the ball into contact with the valve seat.

The bypass valve housing may further comprise a valve cavity located at a lower elevation than an elevation of the orifice and a hole located at a higher elevation than the elevation of the orifice for connecting the valve cavity with an exterior of the bypass valve housing.

The invention will now be described by way of example with reference to the accompanying drawing of which:-
Figure 1 is a side view of a filter assembly including suction filter element and bypass valve located in the oil sump of an automatic transmission;
Figure 2 is bottom view of the filter assembly of Figure 1;
Figure 3 is an end view of the filter assembly of Figure 1; and

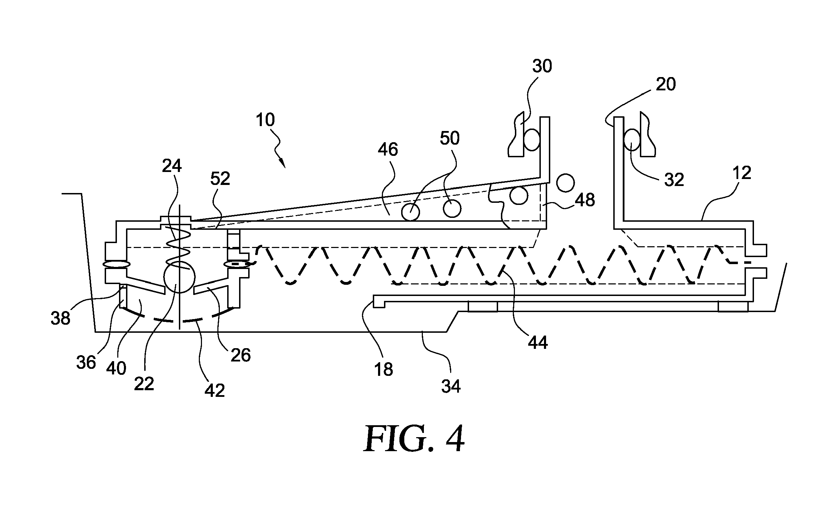

Figure 4 is a side view of the filter assembly showing a channel containing air bubbles.

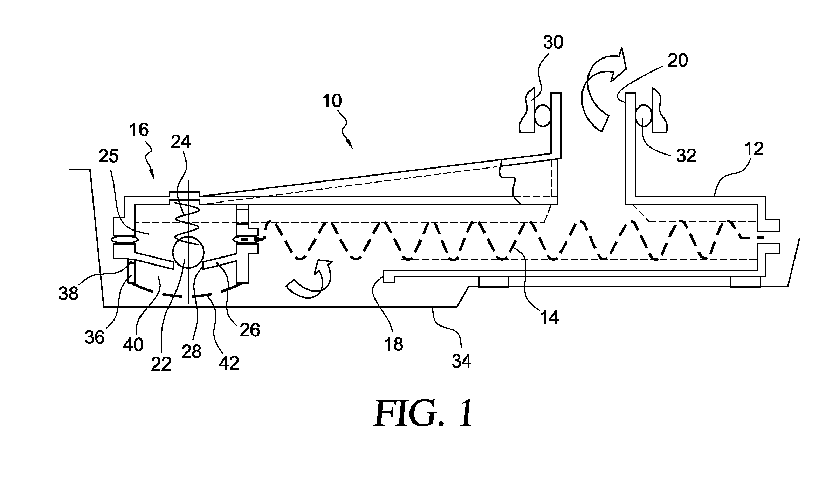

A suction filter assembly 10 is shown in Figure 1 that includes a filter housing 12, filtration media 14 and a pressure bypass valve 16. The filtration media 14 is directly molded to filter housing 12 and separates a housing inlet 18 and a housing outlet 20 so that all of the transmission fluid that enters though through the inlet 18 passes through media 14 to the outlet 20 when the pressure bypass valve 16 is closed. The filtration media 14 is of a construction and type that is able to filter small particulate matter entrained in the transmission fluid.

The pressure bypass valve 16 has a housing 36 and includes a normally-closed check valve having a ball 22 that is biased by a spring 24 towards contact with a seat 26 formed with an orifice 28. The ball 22 and spring 24 are located in a valve chamber 25 located at a higher elevation than seat 26. The bypass valve 16 is closed when the ball 22 contacts the seat 26 and the bypass valve 16 opens when the ball 22 is moved out of contact with seat 26 against the force of spring 24 due to differential fluid pressure across the valve.

Filter outlet 20 is located in a suction inlet 30 of a transmission pump and a seal 32 is fitted into an annular space between the filter outlet 20 and the pump inlet 30 to prevent leakage of the transmission fluid.

The filter inlet 18 is located near the lowest point of a transmission sump 34 sometimes called an oil pan and is below the elevation of a surface of the transmission fluid in the oil pan 34.

To prevent ingesting air when the bypass valve 16 is open and bypassing transmission fluid from the inlet 18 the valve housing 36 is provided with a small vent hole 38 located at the top of a valve cavity 40. Air entrained in transmission fluid that accumulates in valve cavity 40 can escape through the hole 38. To improve the escape of air from the valve cavity 40, valve seat 26 has the form of a truncated cone such that the vent hole 38 is located at the base of the cone and above the elevation of the valve orifice 28.

To minimize the length of time that bypass valve 16 is opened during periods when the transmission fluid temperature is low, the bypass valve 16 is located immediately adjacent the filter inlet 18 where the valve is most exposed to relatively warm transmission fluid flow returning to the oil pump.

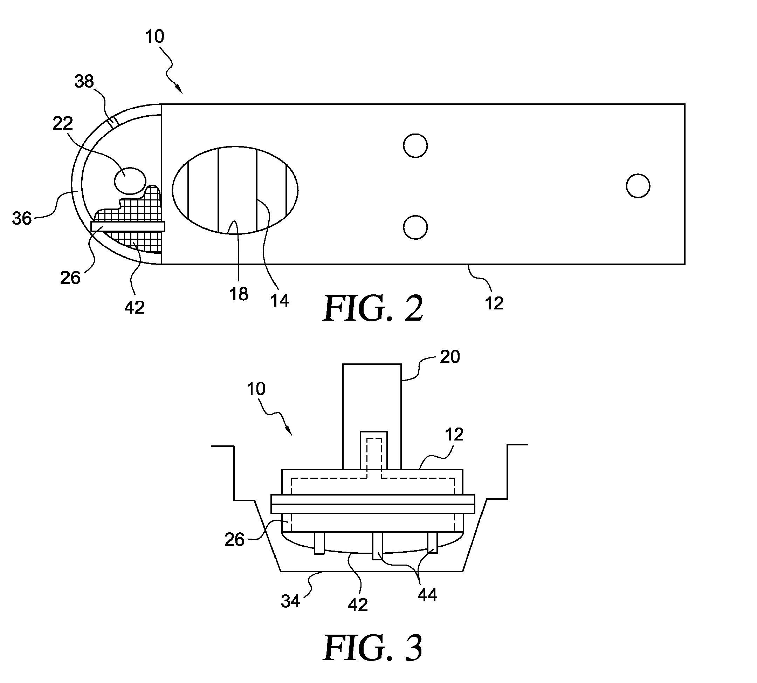

As Figure 2 illustrates, valve housing 36 is rounded at its end to create an unrestricted flow path that promotes flow of fluid in sump 34 toward bypass valve 16 and filter housing inlet 18.

To reduce excessive flow restriction through bypass valve 16 during cold temperature operation, the valve orifice 28 is covered by a screen mesh 42, which has the form of a spherical dome to maximize the surface area of the screen. To further maximize the area of screen 42 the area of its surface covers the rounded portion of the housing 36 where the bypass valve 16 is located and not only the area of the valve orifice 28. Molded ribs 44, formed in valve housing 36, follow the spherical shape of screen 42 and support the screen against collapsing due to fluid pressure. Screen 42 filters large particulate matter carried in the transmission fluid when the bypass valve 16 is open and bypassing fluid through the valve.

To reduce pressure spikes at the pump due to bypass valve 16 rapidly opening and closing under pulsing suction flow conditions, the bypass valve 16 is located downstream and spaced far from the filter assembly outlet 20. This ensures that the maximum differential pressure between filter outlet 20 and valve inlet 28 exists and tends to cause filter housing 12 to act as an accumulator, thereby attenuating and dampening pressure spikes.

To prevent air that might accumulate downstream of bypass valve 16 or in the filtration media 14 from exiting through the filter outlet 20 and entering the pump inlet in a large bubble, filter housing 12 is formed with a slopped air channel 46 or multiple slopped channels, which extend from the area of bypass valve 16 to the filter assembly outlet 20. The air channel 46 merges with outlet 20 through an opening 48 at the highest elevation of the slopped channel 46. Instead of air entering outlet 20 in a large bubble, air that may accumulate above bypass valve 16 is divided into small bubbles 50 at the entrance 52 to channel 46. The small bubbles 50 move rightward in the channel 46, pass through opening 48 and exit through outlet 20 as small bubbles.

Therefore in summary, when the bypass valve is open during cold temperature operation, air that accumulates in the bypass valve is able to pass along the channel in small, dispersed bubbles and enter the pump intake, thereby avoiding bypass valve instability due to fluctuations in pump suction flow and loss of pump prime. To minimize the length of time that the bypass valve is opened during periods when the transmission fluid temperature is low, the bypass valve is located immediately adjacent the inlet, where the valve is most exposed to relatively warm transmission fluid flow returning to the oil pump and the bypass valve housing is rounded at its end to create an unrestricted flow path that promotes flow of fluid toward the valve and filter housing inlet.

## Claims

1. A filter assembly (10) for an automatic transmission **characterised in that** the filter assembly (10) comprises a filter housing (12) including an inlet (18) through which hydraulic fluid enters the housing (12) and an outlet (20) through which hydraulic fluid exits the housing (12) and a bypass valve housing (36) containing a bypass valve (16) located adjacent the inlet (18) in a chamber (25) defined by the bypass valve housing (36), the bypass valve including an orifice (28) that is opened and closed in response to differential pressure across the bypass valve (16).

2. A filter assembly as claimed in claim 1 wherein the filter assembly (10) further comprises a screen (42) secured to the bypass valve housing (36), the screen (42) covering the orifice (28) and having a fine mesh for removing contaminants from the fluid that flows through the bypass valve (16).

3. A filter assembly as claimed in claim 2 wherein the bypass valve housing (36) further comprises ribs (44) for supporting the screen (42).

4. A filter assembly as claimed in claim 2 or in claim 3 wherein the screen (42) is in the form of a dome supported by ribs (44) secured to the bypass valve housing (36).

5. A filter assembly as claimed in any of claims 1 to 4 in which the filter assembly (10) further comprises a channel (46) formed in the filter housing (12) having a second inlet (52) communicating with the chamber (25), a second outlet (48) communicating with the outlet (20) of the valve housing (12) and a length connecting the second inlet (52) and second outlet (48).

6. A filter assembly as claimed in claim 5 wherein the channel (46) increases in elevation as the distance from the second inlet (52) along the channel (46) increases.

7. A filter assembly as claimed in claim 5 or in claim 6 wherein the channel (46) has a depth that increases along the length of the channel (46).

8. A filter assembly as claimed in any of claims 1 to 7 wherein the filter assembly (10) further comprises a filtration element (44) located in the filter housing (12), the filtration element (44) extending from the bypass valve (16) towards the housing outlet (20).

9. A filter assembly as claimed in any of claims 1 to 8 wherein the bypass valve housing (36) further comprises a valve seat (26)in which the orifice (28) is formed, a ball (22) movable into contact with the valve seat (26) to close the orifice (28) and out of contact with the valve seat (26) to open the orifice (28) and a spring (24) for urging the ball (22) into contact with the valve seat (26).

10. A filter assembly as claimed in any of claims 1 to 9 wherein the bypass valve housing (36) further comprises a valve cavity (40)located at a lower elevation than an elevation of the orifice (28) and a hole (38) located at a higher elevation than the elevation of the orifice (28) for connecting the valve cavity (40) with an exterior of the bypass valve housing (36).
